# FASCICULE DE BREVET EUROPEEN

(11) **EP 0 647 176 B1**
(45) Date de publication et mention de la délivrance du brevet: **05.03.1997**
(21) Numéro de dépôt: 93913093.6
(22) Date de dépôt: 04.06.1993
(51) Int. Cl.: B29C 67/00

(54) **PROCEDE DE PRODUCTION DE PIECES INDUSTRIELLES PAR ACTION DE LA LUMIERE SUR UNE MATIERE POLYMERISABLE OU RETICULABLE LIQUIDE SANS NECESSITER DE SUPPORTS**
VERFAHREN ZUR HERSTELLUNG VON INDUSTRIELLEN ARTIKELN DURCH ANSTRAHLEN EINER POLYMERISIERBAREN ODER VERNETZBAREN FLÜSSIGKEIT OHNE DIE NOTWENDIGKEIT VON STÜTZEN
METHOD FOR PRODUCING INDUSTRIAL PARTS BY THE ACTION OF LIGHT ON A LIQUID CURABLE OR CROSS-LINKABLE MATERIAL WITHOUT REQUIRING SUPPORTS

(30) Priorité: 05.06.1992 FR 9207021
(43) Date de publication de la demande: 12.04.1995
(73) Titulaire: LASER 3 D, F-54603 Villers-les-Nancy Cédex (FR)
(72) Inventeur: MEDARD, Claude, F-54603 Villers-les-Nancy Cédex (FR); ALLANIC, André, Luc, F-5400 Nancy (FR); SCHAEFFER, Philippe, F-54700 Atton (FR)
(74) Mandataire: Polus, Camille
(86) Numéro de dépôt international: FR9300537
(87) Numéro de publication internationale: WO9325376

(56) Documents cités:
- EP-A- 0 250 121
- EP-A- 0 416 124
- EP-A- 0 484 183

## Description

La présente invention est relative à un procédé pour la production d'objets ou modèles de pièces industrielles, par action de la lumière et notamment par photo-transformation d'une matière plastique ou composite.

Il est souhaitable de pouvoir disposer d'une pièce industrielle, telle notamment qu'une pièce mécanique, avant d'en lancer la fabrication en série. Actuellement, pour réaliser des modèles de telles pièces, il est nécessaire de faire tout d'abord effectuer des plans cotés au bureau d'étude à partir de données chiffrées qui définissent la forme de la pièce. Depuis quelques années, la méthode de "Conception Assistée par Ordinateur" (CAO) est utilisée pour définir la forme de cette pièce.

Il est connu de pourvoir à un procédé et à un dispositif de production de modèles de pièces industrielles en utilisant les données chiffrées disponibles dans les mémoires de sortie de l'ordinateur, directement pour réaliser les modèles de pièces sans être obligé de passer par l'intermédiaire de plans ou, de devoir faire intervenir des machines d'usinage à commandes numériques telles que fraiseuses, tours, etc ...

Des procédés et dispositifs proposés pour la réalisation de modèles à l'aide de la CAO reposent sur une polymérisation chimique induite par LASER. Le déplacement asservi d'un ou plusieurs faisceaux laser éventuellement concentres en un même point, permet la polymérisation locale d'un monomère avantageusement polyfonctionnel et, de proche en proche, la réalisation de la pièce.

Par exemple, le document [1] décrit un procédé dont le principe général de réalisation d'une pièce repose sur l'emploi d'un appareil comprenant une cuve qui contient le monomère (ou l'oligomère ou le mélange des deux) photopolymérisable liquide au niveau duquel affleure une plate-forme mobile qui descend pas à pas au cours de l'opération. Le faisceau laser trace à la surface du liquide des coupes successives de l'objet à produire, grâce à un jeu de miroirs à déflexion électronique, piloté par la base de données du système de CAO. Le logiciel a préalablement subdivisé le modèle virtuel de l'objet en une multitude de tranches de faible épaisseur. Au fur et à mesure de la solidification de chaque tranche, le modèle "sculpté" plonge lentement dans la cuve : avec un laser de 10 mW, ce système permet de créer une pièce de 30 mm de hauteur en 50 minutes, avec une précision de l'ordre de 1/10ème de millimètre. Le modèle peut être créé en toutes sortes de matériaux (plastiques), en une grande variété de couleurs, avec différentes duretés et toute une gamme de résistances à l'abrasion [3,4].

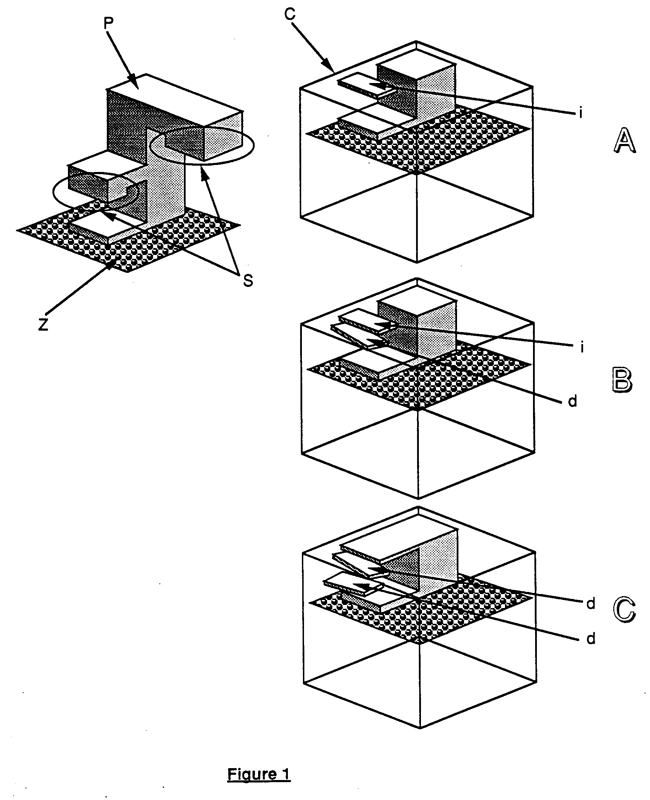

Ce type de procédé, qui nécessite un matériau se trouvant à l'état initial sous forme liquide ou pâteuse, présente un inconvénient lorsqu'on souhaite fabriquer des pièces comportant des parties suspendues. Une fois fixée l'orientation de la pièce par rapport à la verticale (définie par la gravité lors de la phase de fabrication), il peut se produire que certaines portions ne soient soutenues ni par une autre partie de la pièce, ni par le plateau sur lequel repose la pièce (cf. figure 1).

Dans ce cas, lorsque le rayonnement lumineux vient de solidifier la première partie de cette portion, le volume juste solidifié n'est accroché à aucun autre solide, et est isolé dans le liquide. En général, les densités du liquide et du solide sont différentes, et le volume risque de "couler" si la tension superficielle ne suffit pas à le maintenir à la surface. De plus, lors de la mise en place de la couche suivante de liquide, on déplace la pièce en cours de construction par rapport au niveau du liquide. Ce déplacement se faisant par l'intermédiaire du bras mécanique qui la soutient, il est impossible de communiquer le mouvement au volume isolé, qui ne sera donc plus solidaire du reste de la pièce lors de la suite de la fabrication.

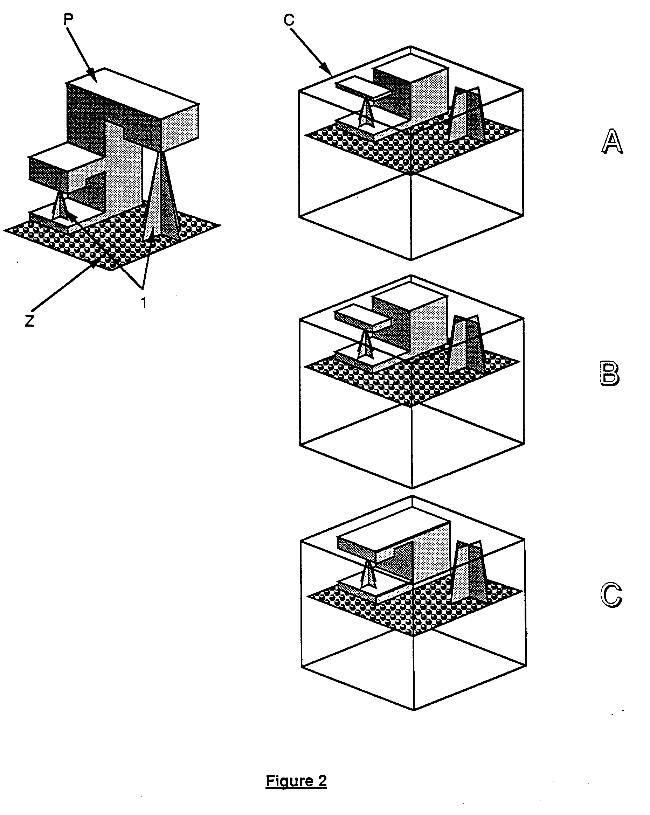

Pour résoudre ce problème, les utilisateurs actuels de ce type de procédé ajoutent à la pièce, préalablement à sa fabrication, des "supports" permettant de rendre les portions suspendues solidaires de la pièce ou du plateau qui la soutient (cf. figure 2).

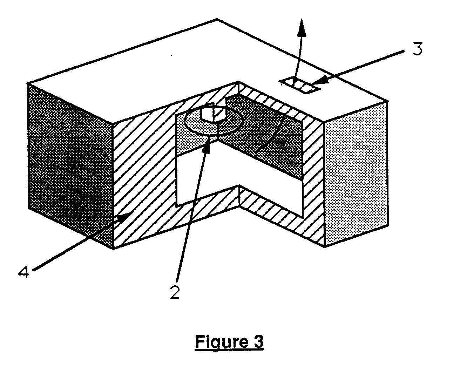

Concrètement, cet ajout se fait par la modification de la base de données issue du système de CAO ayant servi à la conseption de la pièce. Il faut noter que cette phase n'est pas un travail simple, et présente de nombreux inconvénients, pour les raisons suivantes :
- la maitrise du système de CAO ayant servi à la conception de la pièce est nécessaire de la part de l'utilisateur d'une machine de fabrication d'objet en 3 dimensions, problème aggravé par le fait qu'il existe de très nombreux systèmes de CAO différents et incomplètement compatibles
- la suppression des supports une fois la fabrication terminée est un travail qui, s'il n'est pas effectué avec précautions, ou si les supports sont mal placés, peut déteriorer la pièce
- il est assez difficile d'automatiser cette phase, car le placement des supports de manière à faciliter leur suppression (tout en assurant la bonne fabrication de toutes les portions suspendues) exige une longue expérience, difficile à formaliser
- enfin, certaines pièces peuvent avoir des portions suspendues très difficilement accessibles, rendant quasiment impossible leur fabrication par ce type de procédé (cf. figure 3)

D'autres procédés de prototypage rapide, comme par exemple celui décrit dans le document [2], résolvent ce problème en utilisant un matériau solide, qui assure qu'aucune portion isolée ne peut "couler" ou se déplacer lors de la fabrication. Ces procédés présentent cependant d'autres inconvénients par rapport aux procédés utilisant du liquide, en particulier en ce qui concerne la perte de matériau utile lors de la fabrication.

Le but de la présente invention est de modifier le procédé basé sur du liquide pour qu'il présente les mêmes avantages que les procédés à base de matériau solide, sans en présenter les inconvénients.

L'idée de base est que lors de la fabrication, la pièce ne se trouve plus dans un milieu liquide, mais au contraire dans un milieu qui empêche les éléments isolés de couler, les rende solidaires du reste de la pièce, tout en ne posant pas plus de problème lors de l'extraction finale de la pièce que si la pièce était toujours dans du liquide.

Pour cela, il s'agit de fabriquer un milieu artificiel possédant ces propriétés et se trouvant à l'interface entre le liquide et la pièce.

Une première solution consisterait à fabriquer un gel suffisamment solide autour de la pièce pour que les portions isolées ne bougent pas, mais qu'on puisse tout de même extraire la pièce à la fin de sa fabrication.

C'est une solution très difficile à mettre en pratique, car il faudrait des règlages permettant d'obtenir un gel homogène sur des volumes assez grands (au moins de l'ordre du mm³) ce qui est impraticable lorsque l'irradiation a lieu exclusivement par un seul côté du volume, comme c'est le cas dans le procédé dont nous parlons.

C'est pourquoi la présente invention préconise plutôt un milieu qu'on pourrait décrire comme une "poudre mouillée", c'est à dire un grand nombre de petits éléments solides liés par un liquide, pouvant être largement minoritaire en volume par rapport au matériau sous forme solide.

Il est tout à fait possible de fabriquer ce milieu à partir du liquide: la poudre mouillée peut après tout être considéré comme une pièce comme une autre. La fabrication de la pièce peut donc se faire simultanément à la fabrication de la poudre mouillée qui l'entoure, **ce qui évite totalement le recours à un quelconque support, sans gèner l'extraction de la pièce à la fin de la fabrication** (nettoyer ce genre de poudre est beaucoup plus simple que de briser les supports).

Résumons les avantages de l'utilisation de poudre mouillé:
- l'ajout de poudre mouillée à une pièce est extrêmement simple à automatiser : il suffit que la pièce soit entièrement englobée (sur une épaisseur suffisante);
- il est complètement inutile d'ajouter des supports, ce qui se traduit par une diminution spectaculaire du "coût informatique" de la fabrication d'une pièce (certains utilisateurs du procédé considèrent que le temps de fabrication d'une pièce un peu complexe est à 80% composé de travail informatique);
- le nettoyage final risque moins de déteriorer la pièce que lorsqu'il faut en détacher les supports;
- certaines pièces impossibles à fabriquer par ce procédé (par exemple lorsqu'il est impossible d'ajouter des supports car ils ne pourraient être évacués de la pièce à la fin de sa fabrication) deviennent faisables, toujours sans imposer de coût informatique;

Par contre, le fait de fabriquer de la poudre en même temps que la pièce revient à solidifier plus de volume que strictement nécessaire. De plus, certains problèmes de mise en oeuvre doivent être résolus :
- les portions situées à la périphérie du mileu poudreux peuvent être considérées comme isolées du reste de la pièce, et elles risquent de ne pas en être solidaires lors d'un mouvement;
- il ne faut pas que le liquide reste pollué par des grains de poudre une fois la fabrication de la pièce terminée.

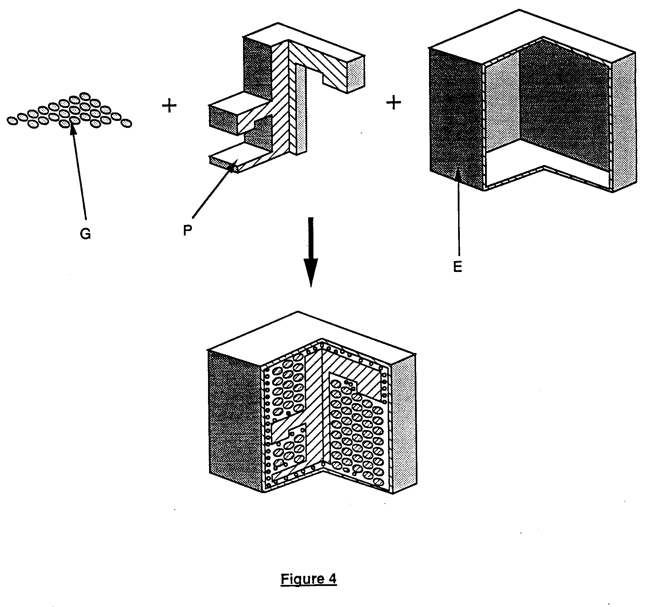

Une solution possible pour résoudre ces problèmes consiste à fabriquer simultanément la pièce, une enceinte étanche autour de la pièce, et de la poudre mouillée située entre l'enceinte et la pièce (cf. figure 4). L'enceinte a pour but de confiner la poudre, et d'en assurer la tenue lors de la mise en place des couches.

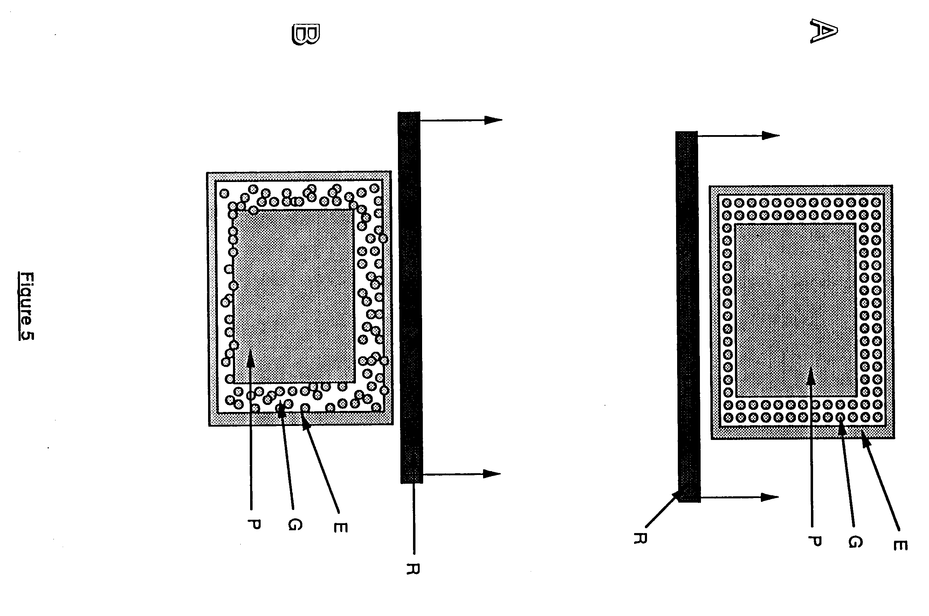

Néanmoins, si la présence d'une enceinte permet d'empêcher la migration de la poudre vers la cuve, elle n'assure pas qu'à l'intérieur de l'enceinte la poudre soit parfaitement immobilisée. Or un déplacement même faible de la poudre à l'intérieur de l'enceinte peut aboutir à l'accrochage accidentel de particules de poudre sur les parois de la pièce lors de la solidification de ces parois (cf. figure 5).

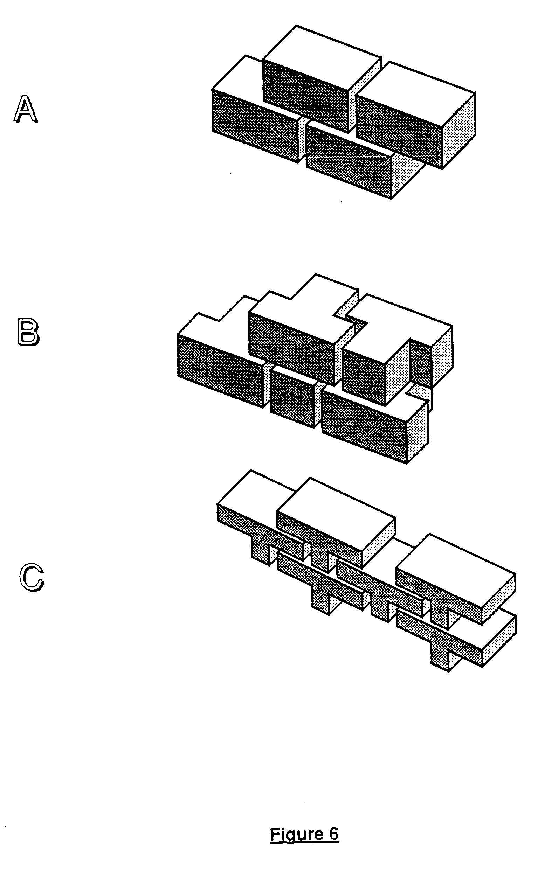

C'est pourquoi il faut concevoir la forme des éléments solides de la poudre de manière à ce qu'ils aient une bonne cohésion, tout en pouvant se laver simplement lors du nettoyage de la pièce. Pour cela, toutes sortes de "grains crochus" peuvent se concevoir, et la figure 6 en montre quelques exemples (A à D).

On peut bien entendu mixer différentes sortes de grains dans la poudre, en utilisant les grains les plus appropriés suivant les caractéristiques géométriques des différentes régions de la pièce.

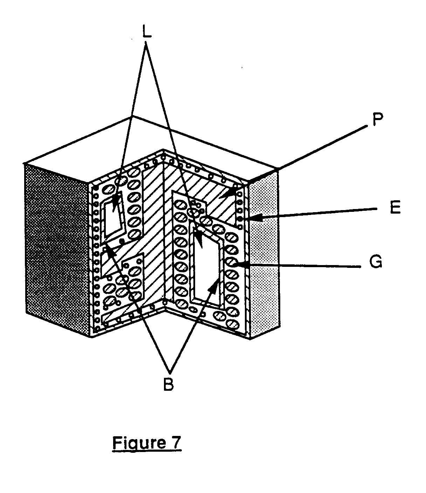

Pour réduire la quantité de résine polymérisée sous forme de poudre, on peut inclure dans des endroits judicieux du milieu poudreux des "bulles" (pas forcément sphériques) de résine entourées d'une enceinte (cf. figure 7). La résine comprise dans ces bulles sera réutilisable pour une prochaine fabrication.

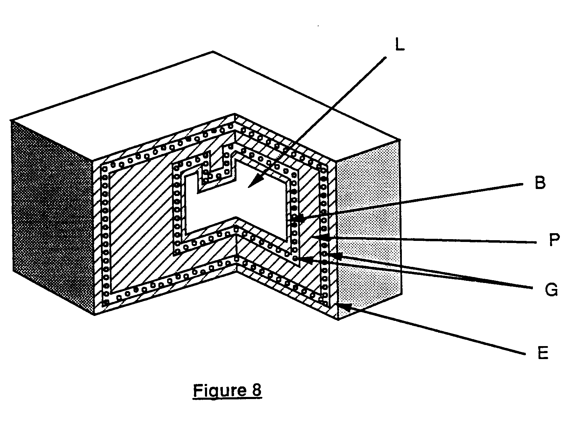

Il faut choisir judicieusement les endroits ou l'on place ces bulles, car il se peut qu'une bulle soit trop grande pour être évacuée de la pièce à la fin de la fabrication (cf. figure 8). On peut contourner ce problème soit en ne mettant pas de bulle dans les endroits difficilement accessibles de la pièce, soit en y mettant des bulles de taille suffisamment petite pour ne pas gèner lors de la phase de nettoyage.

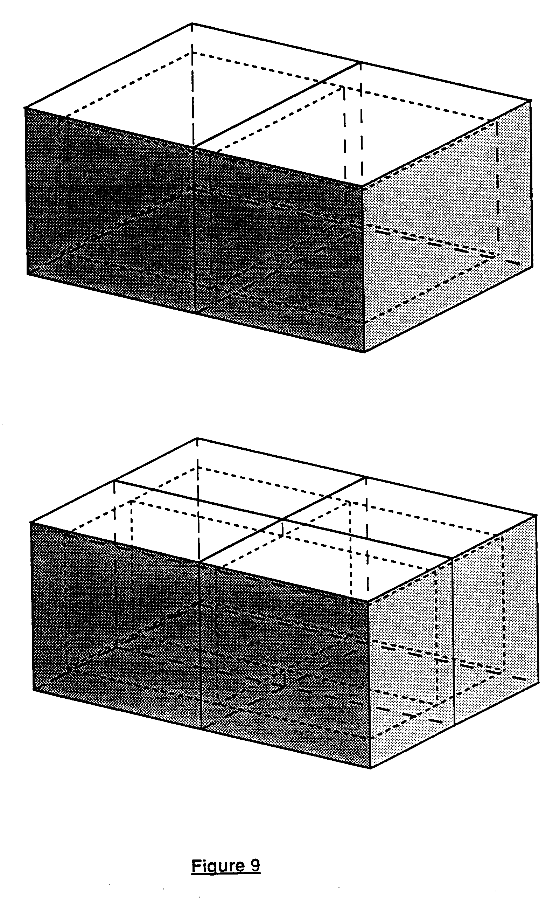

Toujours dans un souci de simplification de la phase finale de nettoyage, il peut être intéressant de faciliter cette tâche en adoptant pour les bulles et l'enceinte une fabrication en coquilles jointives non accrochées entre elles (cf. figure 9). Ainsi, l'extraction de la pièce hors de l'enceinte et la récupération de la résine se trouvant dans les bulles sera considérablement facilitée.

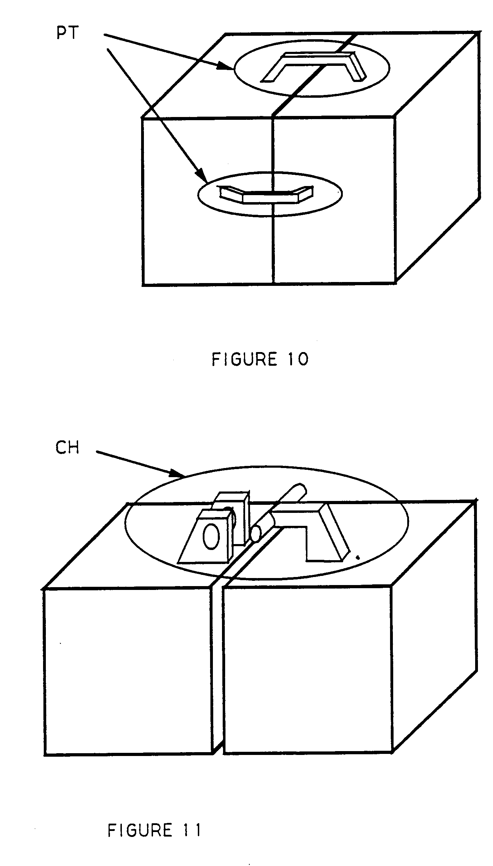

Pour assurer une tenue suffisante de ces coquilles lors de la manipulation de la pièce précédant son nettoyage (sortie de la cuve et transport vers l'aire de nettoyage), les coquilles, et en particulier celles qui composent l'enceinte, peuvent être attachées les unes aux autres par des "ponts" de matière (cf.figure 10), voire des charnières (cf. figure 11). La séparation des coquilles se fait alors en brisant ou en ouvrant ces systèmes d'attache.

La description qui va suivre en regard des dessins annexés exposera plus en détail comment l'invention peut être réalisée.

Figure 1 explicite 3 phases intermédiaires de la fabrication de la pièce "P".

Figure 2 montre comment on procède habituellement pour résoudre les problèmes décrits dans la figure 1.

Figure 3 montre un exemple de pièce pour laquelle il est difficile de mettre en place la technique montrée dans la figure 2.

Figure 4 montre la solution adoptée pour le procédé faisant l'objet de ce brevet.

Figure 5 illustre un problème pouvant se produire lorsqu'on met en oeuvre le procédé décrit à la figure 4.

Figure 6 montre quelques exemples de formes de grains permettant de résoudre les problèmes décrits dans la figure 5.

Figure 7 montre comment l'utilisation de bulles permet de préserver des portions entièrement liquide.

Figure 8 met en évidence le fait qu'utiliser des grains peut résoudre le problème décrit à la figure 3.

Figure 9 montre deux exemples de décomposition d'une enceinte.

Figure 10 montre un exemple d'attaches possible pour maintenir la cohésion des multiples coquilles d'une enceinte.

Figure 11 montre un exemple d'attaches de type "charnière" possible pour maintenir la cohésion des multiples coquilles d'une enceinte.

La figure 1 explicite 3 phases intermédiaires de la fabrication de la pièce "P". On voit que P comporte des régions "S" suspendues, c' est à dire reliées ni à la plaque de soutien de P, ni à une autre partie de P. Lors de l'étape A, la portion "i" (pour "isolée") la plus basse de la région S se trouve solidifiée, mais n'est pas reliée à du solide. Après la descente de P dans le liquide (c'est à dire à l'étape B), la portion "i" de l'étape A peut être considérée comme définitivement détachée de la pièce (elle apparait maintenant comme la portion "d", pour "détachée"). Lorsqu'on arrive à l'étape C, les portions isolées "i" des étapes A et B sont détachées, et sont devenues des portions "d".

La figure 2 montre comment on procède habituellement pour résoudre les problèmes décrits dans la figure 1. Cela consiste eessentiellement à ajouter à "P" des supports "1", de manière à ne pas aboutir à la création de portions de type "i" ou "d", comme l'illustrent les étapes A à C correspondant exactement aux étapes A à C de la figure 1.

La figure 3 montre un exemple de pièce ("4") pour laquelle il est difficile de mettre en place la technique montrée dans la figure 2. Il est en effet très difficile d'évacuer après fabrication (par l'orifice "3") un éventuel support chargé de permettre la fabrication de la région "2" : celui-ci se trouverait complètement à l'intérieur de "4", et serait donc forcé de passer par "3".
- Remarque :: Pour des raisons de lisibilité, les objets figurant dans les figures 4, 7 et 8 sont évidés d'un quart.

La solution adoptée pour le procédé faisant l'objet de ce brevet est décrite dans la figure 4. A la pièce "P" sont associés un ensemble de grains "G" et une enceinte "E", de manière à ce que leur fabrication simultanée aboutisse à un groupe de pièces évitant le recours à des supports, quelle que soit la forme de "P". L'enceinte "E" est conçue pour englober complètement "P", et les grains "G" sont disposés entre "E" et "P", de manière à ce que les parties suspendues de "P" puissent être fabriquées sans ajouter de supports.

La figure 5 illustre un problème pouvant se produire lorsqu'on met en oeuvre le procédé décrit à la figure 4. L'étape A présente la vue de dessus de la surface du liquide en cours de construction d'une pièce (ne figurent que les parties solidifiées "P", "E" et "G"), juste après une phase de polymérisation. Le dispositif "R" chargé de l'établissement de la prochaine couche de liquide s'apprète à passer au dessus des parties solidifiées. Si les grains "G" ne sont pas assez tassés, ils vont être dispersés par le passage de "R", comme le montre l'étape B. Lors de la phase de polymérisation suivante, les grains déplacés vers une position trop proche de "P" risquent de se retrouver associés à "P".

La figure 6 montre quelques exemples de formes de grains "G" permettant de résoudre les problèmes décrits dans la figure 5.

Les grains de type A forment un bloc en 3 dimensions comparable à un mur de briques sans mortier. Suivant la taille relative des grains par rapport à la pièce, la cohésion de l'ensemble peut être suffisante pour ne pas aboutir à une situation copmme celle décrite à la figure 5. La "démolition" de cette structure lors du nettoyage ne pose aucun problème.

Si une plus grande cohésion est nécessaire, les grains de type B à D peuvent être utilisés : ils offrent une bonne résistance au passage d'un système mécanique de mise en place des couches si celui-ci se déplace dans la direction V. Ils permettent toutefois un nettoyage facile.

La figure 7 montre comment l'utilisation de bulles "B" permet de préserver des portions entièrement liquide "L", en limitant le nombre de grains "G" à faire par rapport au nombre nécessaire en l'absence des bulles "B" (cf. figure 4). La quantité de matériau solidifiée (et donc non réutilisable) peut diminuer considérablement de cette manière.

La figure 8 met en évidence le fait qu'utiliser des grains "G" peut résoudre le problème décrit à la figure 3. La totalité des parties solides se trouvant à l'intérieur de "P" à la fin de la fabrication (les grains, qui peuvent être de taille très réduite) peut être évacués par l'orifice "3", ce qui n'aurait pas été le cas si un support avait été nécessaire.

La figure 9 montre deux exemples de décomposition d'une enceinte, pour faciliter sa "démolition" lors du nettoyage de la pièce. L'exemple A découpe l'enceinte en deux coquilles, et l'exemple la découpe en 4.

Les figures 10 et 11 montrent des exemples d'attache possible pour maintenir la cohésion des multiples coquilles formant les enceintes jusqu'à la phase finale du nettoyage (c'est à dire pendant la phase de fabrication, lorsqu'on sort la pièce de la cuve, et lorsqu'on la déplace vers l'aire de nettoyage). Les "ponts de matière solide" PT de la figure 10 sont suffisamment fins (selon la résine) pour pouvoir être facilement brisés à la main. Sur la figure 11 est représenté un exemple de "charnière" CH, permettant de maintenir les coquilles entre elles.

### Références

[1] J.C. André, A. Le Mehauté, O. De Witte, Brevet Français "Dispositif pour réaliser un modèle de pièce industrielle", déposé le 16/07/84. N° 84 11 241
[2] J.C. André, M. Cabrera, J.Y Jezequel, P. Karrer, Brevet Français "Procédé et dispositif de production de modèles de pièces industrielles par action de la lumière", déposé le 19/05/88. N° 88 06 708
[3] SCIENCE ET TECHNOLOGIE N° 2, Février 1988
[4] INDUSTRIAL LASER REVIEW, vol. 2, N° 8, Janvier 1988, pages 11-37.
[5] 2^{nd} International Conference on Rapid Prototyping, pp 29-38, Dayton, June 23-26, 1991

## Revendications

1. Procédé de fabrication d'un ensemble E de pièces solides tridimensionnelles par phototransformation d'un matériau organique liquide polymérisable ou réticulable, par absorption de lumière par des photoamorceurs de polymérisation ou de réticulation, comportant :
a) Au moins une source de rayonnement lumineux
b) Des moyens d'établir et de superposer automatiquement des fines couches du matériau
c) Des moyens optiques permettant de confiner la lumière émise par a) sous forme d'au moins un point d'impact sur le matériau
d) Des moyens de déplacer automatiquement ledit (lesdits) point(s) d'impact sur le matériau
e) un système de calcul et de mémorisation permettant de:
- mémoriser la forme géométrique de l'ensemble E
- calculer un ensemble de volumes élémentaires tel qu'une fois phototransformés, ces volumes élémentaires constituent à eux tous un ensemble F de pièces tel que E soit inclus dans F.
- contrôler et piloter tous les organes automatisés nécessaires à la fabrication.
caractérisé par le fait que dans l'ensemble F des pièces réalisées pour la fabrication de l'ensemble E des pièces désirées, soit inclu un ensemble G de grains solides formant, pendant la phase de fabrication, une poudre plus ou moins fine (du matériau une fois phototransformé) mélangée au matériau encore sous forme liquide, lesdits grains n'ayant pas forcément tous la même forme géométrique.

2. Procédé selon la revendication 1 caractérisé par le fait que dans l'ensemble F (pièces réalisées effectivement) est inclus un ensemble C contenant au moins une enceinte (pièce creuse étanche d'un seul tenant ou composée plusieurs parties jointives).

3. Procédé selon la revendication 2 caractérisé par le fait qu'au moins un des éléments de C englobe complètement au moins un élément de E (une des pièces désirées).

4. Procédé selon la revendication 2 caractérisé par le fait que le volume englobé par au moins un des éléments de C soit entièrement sous forme liquide à la fin de la fabrication.

5. Procédé selon les revendications 3 et 4 caractérisé par le fait que chaque élément de G (grains solides) se trouve à l'intérieur d'un élément de C (enceinte).

6. Procédé selon la revendication 5 caractérisé par le fait qu'au moins un élément de C englobe un volume occupé exclusivement par des éléments de C et/ou de E, et/ou par du milieu V (composé d'éléments de G).

7. Procédé selon la revendication 1 caractérisé par le fait que les éléments de l'ensemble G sont imbriqués entre-eux.

8. Procédé selon la revendication 2 caractérisé par le fait qu'au moins un élément de C soit composé de plusieurs parties jointives reliées entre elles par un système d'attache aisément brisable ou ouvrable.

9. Procédé selon la revendication 8 caractérisé par le fait que le système d'attache est une charnière

10. Procédé selon la revendication 8 caractérisé par le fait que le système d'attache est un pont de matière suffisamment fin pour se briser à la main sans effort.

## Claims

1. Process for manufacturing a set E of solid three-dimensional parts by phototransformation of a polymerisable or crosslinkable liquid organic material, by means of light absorption by polymerisation or cross-linking photoinitiators, comprising:
a) at least one source of light radiation
b) means for automatically creating and superimposing fine layers of the material
c) optical means enabling the light emitted by a) to be confined in the form of at least one point of impact on the material
d) means for automatically moving said point(s) of impact on the material
e) a calculating and memorising system making it possible to:
- memorise the geometric shape of the set E
- calculate a set of elementary volumes such that, once they have been phototransformed, these elementary volumes together constitute a set F of parts such that E is included in F,
- monitor and control all the automatic equipment needed for the production,
characterised in that the set F of parts produced for the manufacture of the set E of desired parts includes a set G of solid granules which, during the manufacturing stage, form a more or less fine powder (of the material once it has been phototransformed) mixed with the material which is still in liquid form, these granules not necessarily all having the same geometric shape.

2. Process according to claim 1, characterised in that the set F (parts actually produced) includes a set C containing at least one enclosure (leaktight hollow part made in one piece or made up of a plurality of connected parts).

3. Process according to claim 2, characterised in that at least one of the elements of C completely encloses at least one element of E (one of the desired parts).

4. Process according to claim 2, characterised in that the volume enclosed by at least one element of C is entirely in liquid form at the end of the manufacturing operation.

5. Process according to claims 3 and 4, characterised in that each element of G (solid granules) is located inside an element of C (enclosure).

6. Process according to claim 5, characterised in that at least one element of C encloses a volume occupied solely by elements of C and/or E, and/or by the medium V (made up of elements of G).

7. Process according to claim 1, characterised in that the elements of set G interlock with one another.

8. Process according to claim 2, characterised in that at least one element of C is made up of a plurality of connected parts joined together by a fixing system which is easily broken apart or opened.

9. Process according to claim 8, characterised in that the fixing system is a hinge.

10. Process according to claim 8, characterised in that the fixing system is a bridge of material which is fine enough to be broken manually without effort.

## Patentansprüche

1. Verfahren zur Herstellung eines Komplexes E aus festen dreidimensionalen Teilen durch Fototransformation eines flüssigen, polymerisierbaren oder vernetzbaren organischen Materials, durch Lichtabsorption von Polymerisations- oder Vernetzungs-Fotostartern, mit:
a) wenigstens einer Lichtstrahlungsquelle,
b) Mitteln zum automatischen Herstellen und Überlagern von feinen Schichten des Materials,
c) optischen Mitteln, die es gestatten, das von a) emittierte Licht in der Form wenigstens eines Auftreffpunktes auf dem Material einzugrenzen,
d) Mitteln zum automatischen Verlagern des Auftreffpunktes (der Auftreffpunkte) auf dem Material,
e) einem Rechen- und Speichersystem, das es gestattet:
- die geometrische Form des Komplexes E zu speichern,
- einen Komplex von Elementarvolumen so zu berechnen, daß diese Elementarvolumen, nachdem sie einmal fototransformiert sind, ihrerseits einen gesamten Komplex F aus Teilen In der Weise bilden, daß E in F enthalten ist,
- alle für die Herstellung notwendigen Automaten zu steuern und zu führen,
dadurch gekennzeichnet, daß der Komplex F aus Teilen, die für die Herstellung des Komplexes E der gewünschten Teile gebildet werden, einen Komplex G aus festen Körnern einschließt, die während der Herstellungsphase ein mehr oder minder feines Pulver (aus dem einmal fototransformierten Material) bilden, das mit dem noch in flüssiger Form vorliegenden Material gemischt ist, wobei diese Körner nicht zwangsläufig alle dieselbe geometrische Form haben.

2. Verfahren nach Anspruch 1, dadurch gekennzeichnet, daß der Komplex F (effektiv gebildete Teile) in einem Komplex C enthalten ist, der wenigstens eine Hülle bildet (dichter Hohlkörper in einem Stück oder aus mehreren aneinanderstoßenden Teilen zusammengesetzt).

3. Verfahren nach Anspruch 2, dadurch gekennzeichnet, daß wenigstens eines der Elemente von C wenigstens ein Element aus E (eines der gewünschten Teile) vollständig umschließt.

4. Verfahren nach Anspruch 2, dadurch gekennzeichnet, daß das von wenigstens einem der Elemente von C umschlossene Volumen am Schluß der Herstellung ganz in flüssiger Form vorliegt.

5. Verfahren nach den Ansprüchen 3 und 4, dadurch gekennzeichnet, daß jedes Element von G (feste Körner) sich im Inneren eines Elements von C (Umhüllung) befindet.

6. Verfahren nach Anspruch 5, dadurch gekennzeichnet, daß wenigstens ein Element von C ein Volumen umschließt, das ausschließlich von Elementen von C und/oder E und/oder dem Milieu V (aus Elementen von G zusammengesetzt) eingenommen wird.

7. Verfahren nach Anspruch 1, dadurch gekennzeichnet, daß die Elemente des Komplexes G miteinander verzahnt sind.

8. Verfahren nach Anspruch 2, dadurch gekennzeichnet, daß wenigstens ein Element von C aus mehreren aneinanderstoßenden Teilen zusammengesetzt ist, die durch ein leicht aufzubrechendes oder zu öffnendes Befestigungssystem miteinander verbunden sind.

9. Verfahren nach Anspruch 8, dadurch gekennzeichnet, daß das Befestigungssystem ein Scharnier ist.

10. Verfahren nach Anspruch 8, dadurch gekennzeichnet, daß das Befestigungssystem eine Materialbrücke ist, die hinreichend fein ist, daß sie mühelos von Hand zerbrochen werden kann.
